# EUROPEAN PATENT APPLICATION

(11) **EP 2 777 964 A1**
(43) Date of publication of application: **17.09.2014**
(21) Application number: 12845000.4
(22) Date of filing: 25.10.2012
(51) Int. Cl.: B60G 17/016, B60G 17/015, B60K 7/00

(54) **SUSPENSION SYSTEM FOR IN-WHEEL MOTOR VEHICLE**

(30) Priority: 02.11.2011 JP 2011241108
(71) Applicant: NTN Corporation, Osaka-shi, Osaka 550-0003 (JP)
(72) Inventor: HIRATA, Junichi, Iwata-shi Shizuoka 438-0037 (JP)
(74) Representative: Hirsch & Associés
(86) International application number: PCT/JP2012/077543
(87) International publication number: WO 2013/065561

(57) **Abstract**

Included are an elastic support mechanism (10) and a shock absorber (11) in a suspension (3) interposed between an in-wheel motor device (1) and a vehicle body structure (2). The elastic support mechanism (10) can change a modulus of elasticity and the shock absorber (11) can change a damping force. The provision is made of a resonance monitoring unit (21) to monitor whether or not a rotational speed of a motor (7) falls within a predetermined resonance frequency range. When the rotational speed of the motor (7) is determined as falling within the resonance frequency range, an elastic modulus control unit (22) changes the modulus of elasticity, and a damping force control unit (23) changes the damping force of the shock absorber (11).

## Description

### CROSS REFERENCE TO THE RELATED APPLICATION

This application is based on and claims Convention priority to Japanese patent application No. 2011-241108, filed November 2, 2011, the entire disclosure of which is herein incorporated by reference as a part of this application.

### BACKGROUND OF THE INVENTION

### (Field of the Invention)

The present invention relates to a suspension system for a vehicle employing in an in-wheel motor used to drive such vehicle and, more particularly, to the suspension system of a kind in which vibrations peculiar to the in-wheel motor mounted vehicle.

### (Description of Related Art)

As a suspension system for an automobile, the electronically controlled suspension system designed to improve the riding quality and the roadability has been suggested in, for example, the non-patent document 1 listed below, which system controls in dependence on the running condition while the spring constant or the damping force is made variable.

### [Prior Art Literature]

Non-patent Document 1: J. Konishi, et al., "Denshi Seigyo Ea Sasupension Sisutemu no Kaihatsu (The Development of Electronically Controlled Air Suspension System)", Nissan Giho, December 25, 1987, No. 23, pp. 17-23.

An in-wheel motor device includes therein, a motor operable to undergo a high speed rotation, and a reduction gear to transmit the rotation of the motor to a wheel after the speed of rotation of the motor has been reduced. Since the in-wheel motor device is disposed below a suspension unlike an electric automobile of a single motor type in which the motor is mounted on a chassis that is supported through a suspension, two types of vibrations occur in the in-wheel motor device as a result of rotation of the motor and those vibrations are apt to be transmitted to a vehicle body structure, thus tending to make vehicle passengers to feel uncomfortable.

### (1) Mechanical Vibration Resulting from Unbalance of Motor Rotor

This vibration is a vibration synchronized with the rotational speed of the motor and is an integral multiple of the rotational speed. In the in-wheel motor device equipped with the above described reduction gear, this vibration generally occurs when the vehicle running speed is a medium speed and a high speed.

### (2) Electrical Vibration Resulting from Cogging Torque of Motor

This vibration is synchronized with the product of the rotational speed of the motor multiplied by the least common multiple of the number of magnetic poles and the number of slots. This vibration occurs when the vehicle running speed is an extremely low speed such as used during, for example, putting the vehicle into a garage.

Each of those vibrations is resonated when it coincides with a natural frequency of the suspension to increase and will often become a vibration by which the vehicle passengers may feel uncomfortable. In the conventional suspension system, nothing has been taken against the vibrations peculiar to such in-wheel motor mounted vehicle.

### SUMMARY OF THE INVENTION

In view of the foregoing, an object of the present invention is to provide a suspension system for an in-wheel motor mounted vehicle in which vibrations peculiar to the in-wheel motor mounted vehicle have been resolved. Hereinafter, the summary of the present invention will be described with the aid of reference numerals used in the accompanying drawings to denote various components of preferred embodiments of the present invention.

The suspension system for an in-wheel motor mounted vehicle designed in accordance with the present invention is a suspension system for an in-wheel motor mounted vehicle, which system comprises a suspension 3, that is interposed between a vehicle body structure 2 and an in-wheel motor device 1 including a wheel support bearing assembly 6 to support a wheel 5, a motor 7 and a reduction gear 8 to transmit rotation of the motor 7 to the wheel support bearing assembly 6, and which suspension 3 includes a shock absorber 11 and an elastic support mechanism 10 having a modulus of elasticity which is adjustable by a drive source 10a. The suspension system further comprises; a sensor 12 to detect a rotational speed of the motor 7; a resonance monitoring unit 21 to monitor whether or not the rotational speed of the motor 7, detected by the sensor 12, falls within a resonance frequency range that is defined as a range which coincides with a natural frequency of the suspension 3; and an elastic modulus control unit 22 to apply a command to change the modulus of elasticity to the drive source 10a of the elastic support mechanism 10 when the resonance monitoring unit 21 determines that the rotational speed of the motor 7 falls within the resonance frequency range.

According to the present invention, the resonance monitoring unit 21 monitors whether or not the rotational speed of the motor 7 falls within the resonance frequency range that is defined as a range which coincides with the natural frequency of the suspension 3. In the event that it is determined by the resonance monitoring unit 21 that the rotational speed of the motor 7 falls within the resonance frequency range, the elastic modulus control unit 22 applies the command to the drive source 10a of the elastic support mechanism 10 in the suspension 3 to change the modulus of elasticity. When the rotational speed of the motor 7 coincides with the natural frequency of the suspension 3, resonance takes place, which leads to a considerable vibration to such an extent as to cause vehicle passengers to feel discomfort, but the change of the modulus of elasticity of the suspension 3 is effective to avoid the resonance and the vibration becoming considerable enough to cause the vehicle passengers to feel discomfort.

The resonance monitoring unit 21 may have, as the resonance frequency range, rotational speed synchronization frequency ranges, each of which is a frequency range having its center defined by one of the rotational speed of the motor 7 and frequencies of integral multiples of the rotational speed of the motor 7, and a cogging torque responsive frequency range, which is a frequency range corresponding to an electrical vibration generated by cogging torque of a motor rotor (a rotor of the motor 7) 7b, and the resonance monitoring unit 21 may determine that the rotational speed of the motor 7 falls within the resonance frequency range when the rotational speed of the motor 7 falls within one of the rotational speed synchronization frequency ranges and the cogging torque responsive frequency range. In this case, the resonance with either one of a mechanical vibration resulting from an unbalance of the motor rotor 7b and an electrical vibration brought about by the cogging torque of the motor 7 can be avoided and it becomes possible to prevent the vibration becoming considerable enough to cause the vehicle passengers to feel discomfort.

In a preferred embodiment of the present invention, a damping force of the shock absorber 11 may be adjustable by a drive source, and the suspension system may further comprise a damping force control unit 23 to apply a command to change the damping force to the drive source 11a of the shock absorber 11 when the resonance monitoring unit 21 determines that the rotational speed of the motor 7 falls within the resonance frequency range. While the damping force of the shock absorber 11 is preferably high in terms of the reduction of the vibration, but if the damping force is high, it may occur that the traveling stability may be hardly obtained. When the damping force of the shock absorber 11 is changed, for example, the damping force is increased in the event that the rotational speed of the motor 7 is determined falling within the resonance frequency range as discussed above, the travelling stability is secured during a normal time with the damping force of the suspension 3 reduced and only when the vibration is generated by the resonance, the damping force is increased to reduce the vibration. In the practice of the present invention, in the event of the motor rotational speed that may result in resonance, the modulus of elasticity of the elastic support mechanism 10 is changed as described above to thereby avoid the resonance, but it may occur that it is not sufficiently avoided. When the resonance is not sufficiently avoided as discussed above, the damping force of the shock absorber 11 is increased to absorb the vibration and, therefore, it is possible to prevent the vibration becoming considerable enough to cause the vehicle passengers to feel discomfort.

In another preferred embodiment of the present invention, the suspension system may further comprise a running condition responsive non-permitting unit 24 to determine whether or not a predetermined change non-permitting condition is true based on one or a plurality of signals out from a signal indicative of a speed of the vehicle equipped with the suspension 3, a signal indicative of an angular acceleration of the vehicle, a braking signal in the vehicle, a steering angle signal in the vehicle and a signal indicative of a stroke position of the shock absorber 11, and to proscribe a control by the elastic modulus control unit 22 when the predetermined change non-permitting condition is true. The angular acceleration is an angular acceleration such as, for example, a rolling, a pitching and a yawing, all occurring in the vehicle. When straight traveling at a constant speed, no acceleration such as the rolling and others is generated in the vehicle and, therefore, the vehicle attitude will not be disturbed even when the modulus of elasticity is changed. However, since various forces such as the rolling, the yawing and others act during the cornering, not only is the vehicle attitude disturbed when the modulus of elasticity is markedly changed, but a risk of getting out of the course will occur. For this reason, by detecting a condition of the vehicle from the vehicle speed (the speed of the vehicle), the brake operation, the steering angle and other and by performing no control to change the modulus of elasticity in the event of, for example, the speed and the angular acceleration exceeding a certain value, the vehicle attitude can be prevented from being disturbed.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a block diagram showing a conceptual structure of a suspension system for a in-wheel motor mounted vehicle according a preferred embodiment of the present invention;
Fig. 2 is a flowchart showing the sequence of operation of the suspension system;
Fig. 3 is a longitudinal sectional view showing one example of an in-wheel motor device;
Fig. 4 is a front elevational view of one example of a suspension;
Fig. 5 is a hydraulic circuit diagram showing one example of an elastic support mechanism; and
Fig. 6 is a fragmentary longitudinal sectional view showing one example of a shock absorber.

### DESCRIPTION OF PREFERRED EMBODIMENTS

A preferred embodiment of the present invention will be described in detail with reference to the accompanying drawings. A suspension system for an in-wheel motor mounted vehicle according to the present invention includes a suspension 3 interposed between an in-wheel motor device 1 and a vehicle body structure 2, and a controller 4 to control the modulus of elasticity and the damping force of the suspension 3.

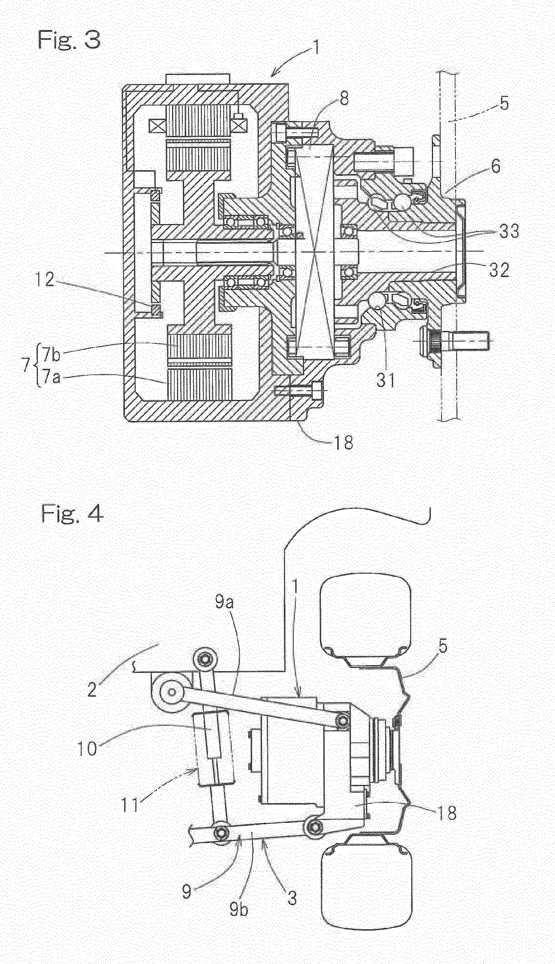

The in-wheel motor device 1 includes, as shown in, for example, Fig. 3, a wheel support bearing assembly 6 to support a wheel 5, a motor 7, and a reduction gear 8 to transmit the rotation of the motor 7 to a rotatable side raceway of the wheel support bearing assembly 6. The wheel support bearing assembly 6 is of a type in which a plurality of rows of rolling elements 33 are interposed between an outer member 31, which will become a stationary side raceway, and an inner member 32, which will become the movable side raceway, and a rim for the wheel 5 is fitted to a flange of the outer member 31. The reduction gear 8 referred to above is a cycloidal reduction gear or an epicycle reduction gear and has a high speed reducing ratio of 10 or higher. Rotation of the reduction gear 8 is transmitted to the inner member 31, which is the rotatable side raceway of the wheel support bearing assembly 6.

The motor 7 referred to above is employed in the form of, for example, a three phase interior magnet synchronous motor and a stator 7a has a coil constituted by a plurality of coil winding portions that are arranged in a circumferential direction. A number of slots hereinafter described is represented by the number of slots each defined between the neighboring coil winding portions. A rotor 7b of the motor 7 has a plurality of magnetic poles arranged in a circumferential direction. The motor 7 is provided with a rotational speed sensor 12 to detect the speed of rotation of the rotor 7b thereof. A housing for the motor 7 and the reduction gear 8 forms an in-wheel motor housing 18 of one piece structure or of a type integrally fixed, and is integrally connected with the outer member 31, which is the stationary side raceway of the wheel support bearing assembly 6.

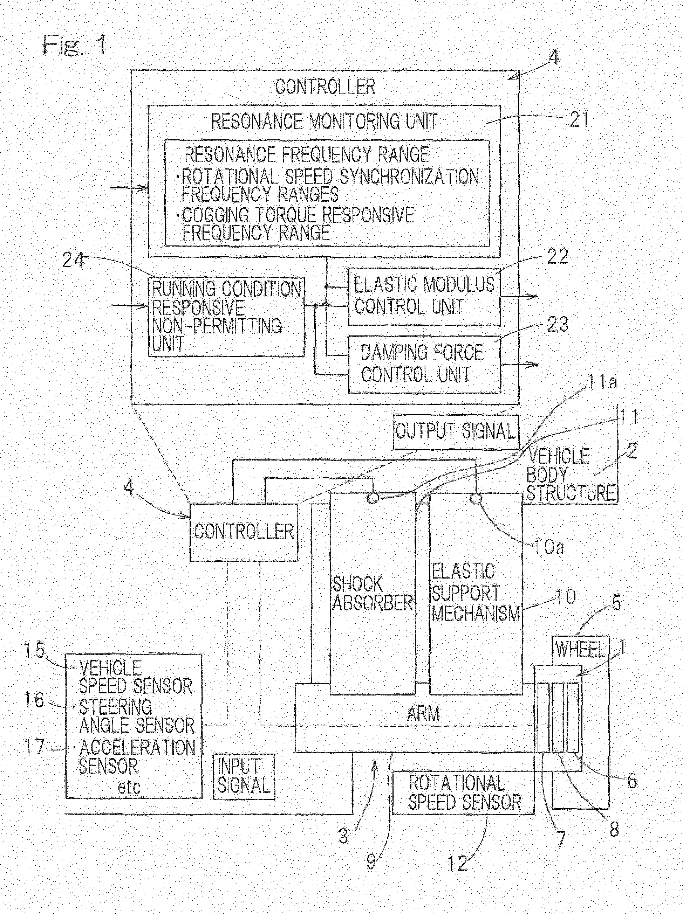

Referring to Fig. 1, the suspension 3 includes, in addition to a support member 9 in the form of, for example, an arm or a link mechanism to support the in-wheel motor device 1 relative to the vehicle body structure 2, an elastic support mechanism 10 and a shock absorber 11. The support member 9 of the suspension 3 may be of any suitable or arbitrarily chosen type and may be rendered to be, for example, a link mechanism in which an upper arm 9a and a lower arm 9b are connected with the vehicle body structure 2 and the in-wheel motor housing 18 of the in-wheel motor device 1, respectively. The elastic support mechanism 10 and the shock absorber 11 are provided between the lower arm 9b and the vehicle body structure 2. The elastic support member 10 and the shock absorber 11 may however be provided between an inner peripheral portion and an outer peripheral portion coaxial with the inner peripheral portion as shown in Fig. 4 or, alternatively, arranged side by side relation as shown in the block diagram of Fig. 1.

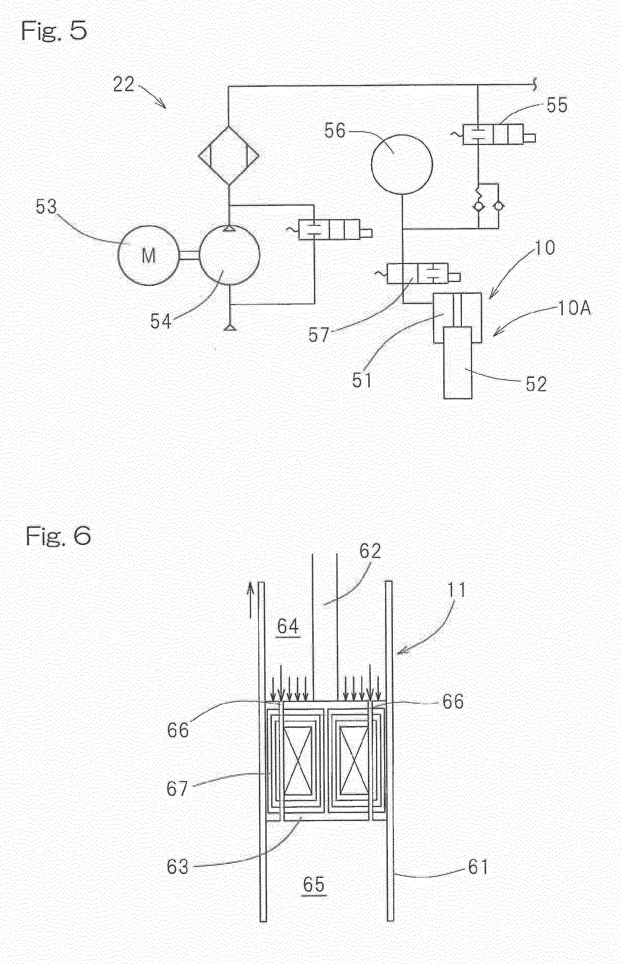

The elastic support mechanism 10 is of a type capable of changing the modulus of elasticity by the drive of a drive source 10a, that is, capable of changing the modulus of elasticity through an electronic control. The elastic support mechanism 10 of the type in which the modulus of elasticity is adjustable may be an air spring type as will be described later with reference to Fig. 5 or of a type in which, although not shown, a coil spring of, for example, non-linear type is used and the position at which the coil spring is supported can be changed by the movement or replacement of the spring support member to thereby change the spring constant which is the modulus of elasticity. The shock absorber 11 is of a type capable of changing the damping force by means of a drive source 11a, that is, of a type in which the damping force can be changed through an electronic control. The type that enables the change of the damping force may be the one in which by controlling a magnetic fluid, as will be described later with reference to Fig. 6, by means of an electromagnet the damping force can be changed, or the one in which the size of an orifice for an orifice passage for a fluid medium or a fluid passage is changed, or any other type.

The controller 4 referred to previously is comprised of, for example, an electric control unit (ECU) or the like solely for the control of the suspension 3 and includes a microcomputer and a program executed by such microcomputer and electronic circuits and others. This controller 4 includes, as shown in the block diagram on an enlarged scale at an upper portion of Fig. 1, as its function implementing module, a resonance monitoring unit 21, an elastic modulus control unit 22, a damping force control unit 23 and a running condition responsive non-permitting (proscribing) unit 24.

The resonance monitoring unit 21 is a unit used to monitor whether or not the rotational speed detected by the rotational speed sensor 12 of the motor 7 falls within a resonance frequency range which is defined as a range that coincides with a natural frequency of the suspension 3, and then to output a determination signal descriptive of whether or not it falls within the resonance frequency range. The resonance frequency range defined in the resonance monitoring unit 21 is available in two ranges including rotational speed synchronization frequency ranges and a cogging torque responsive frequency range, and when the rotational speed of the motor 7 falls within one of those ranges, it is determined as failing within the resonance frequency range.

Each of the rotational speed synchronization frequency ranges referred to above is a frequency range having its center defined by one of the rotational speed of the motor and frequencies of integral multiples of the rotational speed of the motor, with a certain margin (width) defined arbitrarily thereto. It is to be noted that the rotational speed referred to above is also called the rotational frequency.

The cogging torque responsive frequency range referred to previously is a frequency range corresponding to electrical vibration generated by cogging torque of the motor rotor and may be a frequency range having its center defined by, for example, (the rotational speed of the motor) x (the least common multiple of the number of magnetic poles and the number of the slots), with a certain margin defined arbitrarily thereto.

The elastic modulus control unit 22 referred to previously is a unit operable to apply to the drive source 10a of the elastic support mechanism 10 a command necessary to change the modulus of elasticity in the event that it is determined by the resonance monitoring unit 21 that the rotation speed of the motor 7 falls within the resonance frequency range . The change of the modulus of elasticity may be either an increase of the modulus of elasticity or a decrease of the modulus of elasticity and is defined arbitrarily.

The damping force control unit 23 referred to previously is a unit operable to apply a command to change the damping force to the drive source 11a of the shock absorber 11 in the event that it is determined by the resonance monitoring unit 21 that the rotational speed of the motor 7 falls within the resonance frequency range. The change of the damping force is, for example, an increase of the damping force. The extent to which the damping force is changed is arbitrarily defined by determining a proper value during, for example, designing.

The running condition responsive non-permitting (proscribing) unit 24 referred to previously is a unit operable to determine whether or not a predetermined change non-permitting condition is true based on one or a plurality of signals out from a signal indicative of a speed of the vehicle equipped with the suspension 3, a signal indicative of an angular acceleration of the vehicle, a braking signal in the vehicle, a steering angle signal in the vehicle and a signal indicative of a stroke position of the shock absorber 11, and to proscribe a control by the elastic modulus control unit 22 when the predetermined change non-permitting condition is true. In the embodiment now under discussion, the running condition responsive non-permitting unit 24 proscribes the control even with respect to the damping force control unit 23 in the event that it is determined that the change non-permitting condition is true.

The signal indicative of the vehicle speed (the speed of the vehicle), the steering angle signal and the signal indicative of the angular acceleration, all referred to above, are procured from a vehicle speed sensor 15, a steering angle sensor 16 and an acceleration sensor 17, all attached to the vehicle, respectively. The braking signal is procured from a sensor to detect the amount of a brake pedal depressed, or from the electric control unit (not shown) that performs the control by fetching such sensor signal. The signal indicative of the stroke position of the shock absorber 11 is procured from the amount of stroke of the shock absorber 11 while a sensor (not shown) is fitted to the shock absorber 11.

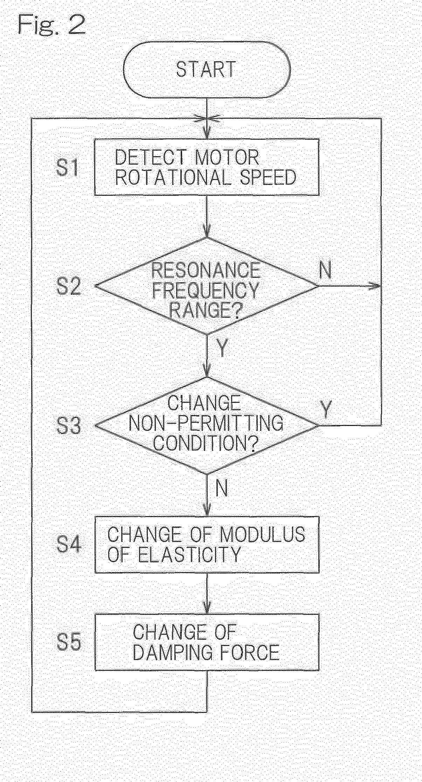

The operation of the foregoing construction will now be described. Fig. 2 illustrates a flowchart showing the sequence of operation of the controller 4. The resonance monitoring unit 21 shown in Fig. 1 monitors the rotational speed of the motor 8 (the motor rotational speed, at step S2 shown in Fig. 2) and then determines (at step S2) whether or not it is within the defined resonance frequency range. In the event of departure from the resonance frequency range, a rotational speed detection (at step S1) and the determination (at step S2) of whether it is within the resonance frequency range are repeatedly performed. On the other hand, in the event that as a result of the determination at step S2 it is determined within the resonance frequency range, a determination is made to determine whether or not the change non-permitting condition is true by the running condition responsive non-permitting unit 24 and, if it is true, the program flow goes back to the step S 1 of monitoring the rotational speed.

If the change non-permitting condition is not true, the modulus of elasticity of the elastic support mechanism 10 is changed (at step S4) by the elastic modulus control unit 22 and, further, the damping force of the shock absorber 11 is changed (at step S5) by the damping force control unit 23. This change is assumed to be, for example, a change to increase the damping force.

While when the rotational speed of the motor 7 coincides with the natural frequency of the suspension 3, resonance occurs and it leads to a large vibration enough to allow vehicle passengers to feel discomfort, the change of the modulus of elasticity of the suspension 3 in the manner described above is effective to avoid the resonance and the vibration becoming considerable enough to cause the vehicle passengers to feel discomfort.

In this case, the resonance monitoring unit 21 has, as the resonance frequency range, the rotational speed synchronization frequency ranges, each of which is a frequency range having its center defined by one of the rotational speed of the motor 7 and frequencies of integral multiples of the rotational speed of the motor 7, and the cogging torque responsive frequency range, which is a frequency range corresponding to an electrical vibration generated by cogging torque of a motor rotor 7b, and the resonance monitoring unit 21 determines that the rotational speed of the motor 7 falls within the resonance frequency range when the rotational speed of the motor 7 falls within one of the rotational speed synchronization frequency ranges and the cogging torque responsive frequency range. For this reason, resonances to any of the mechanical vibration, resulting from an unbalance of the motor rotor 7b, and the electrical vibration resulting from the cogging torque of the motor 7 can be avoided and it becomes possible to prevent the vibration becoming considerable enough to cause the vehicle passengers to feel discomfort.

When it is determined that the rotational speed of the motor 7 falls within the resonance frequency range, in addition to the change of the modulus of elasticity of the elastic support mechanism 10 referred to above, the damping force of the shock absorber 11 is changed. For this reason, the following advantages can be obtained. Specifically, while the damping force of the shock absorber if large is preferred in terms of the reduction of vibration, it may occur that the stability in traveling will be difficult to secure. If the change of the damping force of the shock absorber 11, for example, the increase of the damping force is effected in the event that it is determined that the rotational speed of the motor 7 falls within the resonance frequency range, the travelling stability is secured with the damping force of the suspension 3 minimized during a normal time, but the damping force is increased only when vibration occurs as a result of resonance and, thus, the vibration can be reduced. As described above, when the motor rotational speed which resonates is attained, the modulus of elasticity of the elastic support mechanism 10 is changed to avoid the resonance, but it may occur that it cannot be sufficiently avoided. When the resonance is not sufficiently avoided as discussed above, the damping force of the shock absorber 11 is increased to allow the vibration to be absorbed and, thus, to become the vibration which the vehicle passengers may barely feel can be avoided.

Also, whether or not the change non-permitting condition is true is determined by the running condition responsive not-permitting unit 24 from any of the vehicle speed, the angular acceleration, the braking signal, the steering angle signal, the stroke position of the shock absorber 11 and others and, in the event that it is true, the change of the modulus of elasticity and the change of the damping force are not permitted. For this reason, the following advantages can be obtained. Specifically, when straight traveling at a constant speed, no acceleration such as the rolling and others is generated in the vehicle and, therefore, the vehicle attitude will not be disturbed even when the modulus of elasticity such as, for example, the spring constant is changed. However, since various forces such as the rolling, the yawing and others act during the cornering, not only is the vehicle attitude disturbed when the modulus of elasticity is markedly changed, but a risk of getting out of the course will occur. For this reason, by detecting a condition of the vehicle from the vehicle speed (the speed of the vehicle), the brake operation, the steering angle and other and by performing no control to change the modulus of elasticity in the event of, for example, the speed and the angular acceleration exceeding a certain value, the vehicle attitude can be prevented from being disturbed.

Fig. 5 illustrates a specific example of the elastic modulus control unit 22. This elastic modulus control unit 22 is comprised of an air spring 10A. A ram having a portion thereof inserted into a cylinder chamber 51 so as to advance and retract one at a time is elastically supported by an air pressure within the cylinder chamber 51. An air compressed by a compressor 54 that is driven by a motor 53 is guided to a supply valve 55. By selectively switching the supply valve 55 on and off, the flow of the air within the air spring 10A is adjusted, and an adjustment of the vehicle height takes place. The air spring 10A is connected with a sub-tank 56 installed separately and, by switching a cut valve 57 on and off to change the capacity of the cylinder chamber 51, the spring constant can be changed. If the sub-tank 56 is increased, the change of the spring constant becomes considerable. The motor 53, the compressor 54 and the cut valve 57, all referred to above, corresponds to the drive source 10a shown in and described with reference to Fig. 1. Where the spring constant is changed, on or off of the cut valve 57 is switched.

Fig. 6 illustrates a specific example of the shock absorber 11. This example is a type utilizing a magnetic fluid medium. When a working oil is permitted to flow in and out through an orifice passage 66 between upper and lower oil chambers 64 and 65 in a cylinder 61 that is partitioned by a piston 63 at a lower end of a ram 62, the damping force can be obtained. The magnetic fluid medium, in which a magnetic material is dispersed, is used for the working oil and, by applying an electric charge to the working oil through an electromagnetic coil 67 within the piston 63, flow resistance of the working oil itself is changed and then the damping force is changed. In such case, the electromagnetic coil 67 stands for the drive source referred to in the appended claims.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are, unless they depart from the scope of the present invention as delivered from the claims annexed hereto, to be construed as included therein.

### [Reference Numerals]

- 1: In-wheel motor device
- 2: Vehicle body structure
- 3: Suspension
- 4: Controller
- 5: Wheel
- 6: Wheel support bearing assembly
- 7: Motor
- 8: Reduction gear
- 10: Elastic support mechanism
- 10a: Drive source
- 11: Shock absorber
- 11a: Drive source
- 21: Resonance monitoring unit
- 22: Elastic modulus control unit
- 23: Damping force control unit
- 24: Running condition responsive non-permitting unit

## Claims

1. A suspension system for an in-wheel motor mounted vehicle, which system comprises a suspension, that is interposed between a vehicle body structure and an in-wheel motor device including a wheel support bearing assembly to support a wheel, a motor and a reduction gear to transmit rotation of the motor to the wheel support bearing assembly, and which suspension includes a shock absorber and an elastic support mechanism having a modulus of elasticity which is adjustable by a drive source, and the suspension system further comprises;
a sensor to detect a rotational speed of the motor;
a resonance monitoring unit to monitor whether or not the rotational speed of the motor, detected by the sensor, falls within a resonance frequency range that is defined as a range which coincides with a natural frequency of the suspension; and
an elastic modulus control unit to apply a command to change the modulus of elasticity to the drive source of the elastic support mechanism when the resonance monitoring unit determines that the rotational speed of the motor falls within the resonance frequency range.

2. The suspension system for the in-wheel motor mounted vehicle as claimed in claim 1, wherein the resonance monitoring unit has, as the resonance frequency range, rotational speed synchronization frequency ranges, each of which is a frequency range having its center defined by one of the rotational speed of the motor and frequencies of integral multiples of the rotational speed of the motor, and a cogging torque responsive frequency range, which is a frequency range corresponding to an electrical vibration generated by cogging torque of a motor rotor, and the resonance monitoring unit determines that the rotational speed of the motor falls within the resonance frequency range when the rotational speed of the motor falls within one of the rotational speed synchronization frequency ranges and the cogging torque responsive frequency range.

3. The suspension system for the in-wheel motor mounted vehicle as claimed in claim 1, wherein the shock absorber has a damping force which is adjustable by a drive source, and the suspension system further comprises a damping force control unit to apply a command to change the damping force to the drive source of the shock absorber when the resonance monitoring unit determines that the rotational speed of the motor falls within the resonance frequency range.

4. The suspension system for the in-wheel motor mounted vehicle as claimed in claim 1, further comprises a running condition responsive non-permitting unit to determine whether or not a predetermined change non-permitting condition is true based on one or a plurality of signals out from a signal indicative of a speed of the vehicle equipped with the suspension, a signal indicative of an angular acceleration of the vehicle, a braking signal in the vehicle, a steering angle signal in the vehicle and a signal indicative of a stroke position of the shock absorber, and to proscribe a control by the elastic modulus control unit when the predetermined change non-permitting condition is true.
